Europäisches Patentamt

European Patent Office

Office européen des brevets

(11) Veröffentlichungsnummer: **0 319 995**

**A2**

(12) **EUROPÄISCHE PATENTANMELDUNG**

(21) Anmeldenummer: **88120615.5**

(51) Int. Cl.⁴: **B65B 9/20**

(22) Anmeldetag: **09.12.88**

(30) Priorität: **10.12.87 US 130955**
**05.08.88 US 228731**

(43) Veröffentlichungstag der Anmeldung:
**14.06.89 Patentblatt 89/24**

(84) Benannte Vertragsstaaten:
**AT CH DE FR GB IT LI SE**

(71) Anmelder: **ZIP-PAK INCORPORATED**
**P.O. Box 4560**
**Northbrook Illinois 60065(US)**

(72) Erfinder: **Boeckmann, Hugo**
**1318 South Walnut**
**Arlington Heights Illinois 60005(US)**

(74) Vertreter: **Mey, Klaus-Peter, Dr.-Ing.**
**Dipl.-Wirt.-Ing. et al**
**Patentanwälte**
**HEMMERICH-MÜLLER-GROSSE-POLLMEIER--**
**MEY Aachener Strasse 712**
**D-5020 Frechen 4(DE)**

(54) **Mit Reissverschluss versehene Folienführung sowie Spannapparat zur Bildung von Verpackungen.**

(57) Nach der Erfindung werden ein Verfahren und eine Vorrichtung zum Transport einer fortlaufenden Länge von Plastikfolie (10′) zur Herstellung von Beuteln (15′) mit wiederverschließbaren Reißverschlüssen (10a, 10b) vorgestellt, wobei die Folie (10′) über einem Zufuhrstutzen (14′) geformt wird, ferner mit Einrichtungen (12′, 13′) zum Verschluß der Folienränder (10a, 10b) oder zum anderweitigen Zusammenfügen der Reißverschlußelemente zur Bildung eines Schlauchbeutels (16′). Gegenüberliegende Paare von Treibriemen zum Andrücken der Folie (10′) gegen das Füllrohr (14′) und schrittweiser Vortrieb der Folie (10′) nach unten sind vorgesehen. Gegenüberliegende Kurvenkörper (17′) greifen an den Beutelrändern an und berühren einander zunächst in einem Punkt kurz außerhalb der Beutelränder, um sich dann progressiv auf die Beutelkanten zuzubewegen, wobei die Berührungspunkte an beiden Seiten nach außen wandern, während die Kurvenkörper (17′) nach innen auf dem Beutel (16′) fortschreiten. Auf diese Weise wird vorteilhaft eine Spannkraft auf die Beutelfolie (16′) ausgeübt, zum Glätten der gesamten Breite bevor ein Querverschluß (21) gebildet wird.

FIG. 1a

## Mit Reißverschluß versehene Folienführung sowie Spannapparat zur Bildung von Verpackungen

Die Erfindung bezieht sich auf wiederverschließbare Beutel und auf Verfahren und Vorrichtungen zur Herstellung solcher Beutel und weiterhin insbesondere auf die kontinuierliche Bildung von Beuteln mittels eines Verfahrens zum Befüllen und Verschließen, mit verbesserten Mitteln zum Transport der Folie, zum seitlichen Strecken bzw. Spannen der Folie, zur Entfernung von Falten sowie Querverschließen und Abtrennen der seitlich gespannten Folie, zur Fertigstellung des Verschlusses eines gefüllten Beutels und zur Bildung eines Verschlusses am Ende eines Rohres, um einen nachfolgenden Beutel mit Inhaltsstoffen zu füllen.

Wiederverschließbare Beutel mit in Art der Nut- und Federverbindung angepaßten Profilstreifen, die wiederverschließbar mit Reißverschlußelementen entlang der Öffnung eines Beutels zusammenwirken, sind seit geraumer Zeit bekannt. Verschiedenartige Herstellungsverfahren sind angewandt worden, wobei nach beispielsweise einer Methode ein Beutel unter Strangpressen der Plastikfolie mit integrierten wiederverschließbaren Elementen hergestellt wurde. Nach anderen Herstellungsarten werden die Reißverschlußelemente auf der Oberfläche der Folien befestigt, wobei beides eine Aussteifung mit wiederverschließbaren Reißverschlußprofilen auf der Oberfläche bildet.

Ein Verfahren zur Bildung von Beuteln wurde als Formbefüllungs- und Verschlußverfahren bekannt, wobei ein fortlaufendes Folienband vorwärts nach unten über einen Formstutzen geführt wird und die Ränder der Folie mittels eines wiederschließbaren Reißverschlusses zusammengefügt werden, um so einen Schlauch zu bilden. In einer anderen Ausgestaltung sind die Reißverschlußelemente bereits verbunden und ein fortlaufender Saum vereinigt die Ränder der Folie zur Bildung des Schlauches. Der auf diese Weise geformte Schlauch wird in Abständen quer verschlossen und es werden in die Beutel nach unten durch den Einfüllstutzen Inhaltsstoffe eingefüllt.

Eine verbesserte Beutelbildung, hergestellt nach den vorbeschriebenen Verfahren, ergibt sich aus Fortschritten bei der Entwicklung von wiederverschließbaren Verschlüssen. Demgemäß kann ein in dieser Weise gestalteter Beutel geöffnet und wieder verschlossen werden, sofern die verwendete Folie wiederverschließbare, fortlaufende Reißverschlußelemente aufweist, die sich entlang der Folienränder erstrecken; und die zusammengefügten Reißverschlußelemente werden quer versiegelt und abgetrennt, wobei der Querverschluß die Beutel am Kopfende des transportierten Schlauches bildet.

Bei der Bildung solcher Beutel ist es nötig, ein fortlaufendes Folienband ruckweise über einen Einfüllstutzen zu befördern, um auf diese Weise die Folie in Beutelform zu bringen. Zwischen dem intermittierenden Transport der Folie wird der wiederverschließbare Verschluß oder Reißverschluß, der die Bandkanten zusammenfügt, mittels Ultraschall an den Beutelbreitseiten punktgeschweißt, zur Aufrechterhaltung des Eingriffs der in Wirkungsverbindung stehenden Profilierungen. Ein Querverschluß bzw. eine Querversiegelung wird am Ende des Schlauches erzeugt und Inhaltsstoffe fallen infolge Schwerkraft herunter durch den Zuführstutzen zur Befüllung des Schlauchbeutels. Danach wird die Folie weiter transportiert und eine neue Querversiegelung gebildet, um den Beutel auch am anderen Ende mit einem Verschluß zu versehen.

Die Vorrichtung und das Verfahren zum Transport der Folie ist entscheidend zur Bildung von Beuteln geeigneter Breite und es kann sogar noch entscheidender sein, wenn bestimmte Aufdrucke auf einem Beutel zueinander in Deckung gebracht werden müssen. Es ist ebenfalls wichtig, daß die Folie ohne Drehung auf dem Einfüllstutzen transportiert wird, so daß der wiederverschließbare Verschluß immer an der richtigen Stelle an der Seite oder am Kopf des Beutels zu liegen kommt. Ferner muß der Beutel so transportiert werden, daß die Verschlußeinrichtung dauerhaft die Beutelenden unter Bildung einer ausreichenden Versiegelung zwischen den Folienrändern verschließt.

Bei der Bildung von Beuteln aus dünner, leichter Plastikfolie in einem Form-, Füll- und Verschlußverfahren ist es ebenfalls von Wichtigkeit, den geformten Schlauch gegen Feuchtigkeit sowie luftdicht quer zu versiegeln. Die Querversiegelung erfolgt gewöhnlich durch Verwendung beheizter Versiegelungsleisten und unter Aufspannen und Glattstreichen des Schlauches zur Bildung einer Quernaht. Mit den hierfür verfügbaren Methoden und Konstruktionen war es nahezu unmöglich, diese Querversiegelung ohne Einschlüsse einiger Falten in der schlauchförmigen Folie zu erreichen. Solche Falten beeinträchtigen die ansprechende Gestaltung des Beutels und können leicht zu einer Undichtigkeit durch die Naht führen.

Es ist demgemäß eine Aufgabe der vorliegenden Erfindung, eine verbesserte Konstruktion und ein Verfahren zum Transport der Folie in einer Form-, Füll- und Verschlußvorrichtung vorzustellen, wobei Folie mit einem wiederverschließbaren Verschluß verwendet wird.

Eine weitere Aufgabe der Erfindung besteht darin, eine verbesserte Vorrichtung zum Folientransport in einer Form-, Füll- und Verschlußvorrichtung aufzuzeigen, worin verhältnismäßig empfindliche Folie verwendet werden kann und die mit Genauigkeit und Zuverlässigkeit transportiert wird, so daß die Funktionen der Formgebung und Querversiegelung, das Füllen und die Bildung der längsverlaufenden Naht sorgfältig und zuverlässig durchgeführt werden können.

Eine weitere Aufgabe der Erfindung ist es, einen verbesserten Folientransportmechanismus vorzusehen, der in der Lage ist, die Folie ohne Faltenbildung oder Beanspruchung zu transportieren und wobei eine genaue Kontrolle der Schrittweite der Transportbewegung bewirkt werden kann.

Eine weitere Aufgabe der Erfindung besteht darin, eine verbesserte Methode und Vorrichtung zur Bildung von Beuteln aus einem fortlaufenden Folienband vorzustellen, wobei die Folie zu einem Schlauch geformt und der Schlauch querverschlossen wird, mit der Zielrichtung nach der Erfindung, insbesondere auch eine Glättung des Schlauches in der Art zu erreichen, daß die Querverschlüsse ohne Faltenbildung durchgeführt werden können.

Gemäß der vorliegenden Erfindung wird dünne Plastikfolie zur Bildung von Beuteln in einem Form-, Füll- und Verschlußverfahren vorwärts transportiert, wobei das flache Plastikband um einen rohrförmigen Einfüllstutzen gewickelt wird, durch den Inhaltsstoffe in den fertigen Beutel gefüllt werden. Die Folie wird einzig und allein dadurch transportiert bzw. gefördert, daß die äußere Oberfläche der Folie durch Reibungs- oder Vakuumtreibriemen nach unten vorgetrieben wird. Die Treibriemen sind vorzugsweise als zwei Paare von Bändern ausgebildet, wobei ein Paar rittlings auf dem in Längsrichtung verlaufenden Verschluß aufsitzt. Die Treibriemenpaare sind diametral einander gegenüber angeordnet und weisen im wesentlichen eine identische Konstruktion auf, so daß gleiche und entgegengesetzte Kräfte auf die Folie wirken, so daß selbst sehr leicht zerbrechliches, weiches Folienmaterial, das ansonten leicht faltbar und dehnbar ist, benutzt und gleichmäßig so transportiert werden kann, daß sich die in Längsrichtung verlaufende Naht bildet. Hilfsmittel sind dazu vor einem Treibriemenpaar zur genauen und zuverlässigen Führung des wiederverschließbaren Verschlusses zwischen zwei der Riemen vorgesehen.

Die empfindliche Folie, aus der ein Schlauch gebildet wird und die von gleichartigen Treibriemen heruntergezogen wird, wird querversiegelt aber zuerst seitwärts so gespannt, daß alle Falten aus dem Schlauch wölbungsfrei herausgezogen werden. Dies wird durch entgegengesetzt angeordnete, in gleicher Weise ausgebildete und montierte kammartige Kurvenkörper erreicht, die gegeneinander drücken und automatisch nach außen bewegt werden, so daß sie auf eine Kante der Folie zulaufen und sie nach außen ziehen und auf diese Weise die Falten beseitigen. Die Kamm- bzw. Spanneinrichtungen sind so ausgebildet, daß sie auf den äußersten Rändern der Folie ansetzen, so daß keine Falten dadurch entstehen, daß die Oberflächen mit ihnen in Berührung kommen müssen, um sie nach außen zu ziehen.

Weitere Aufgaben, Vorteile und Merkmale im Zusammenhang mit der Lehre der Erfindung sind in Verbindung mit der Offenbarung der bevorzugten Ausführungsformen in der Beschreibung, den Ansprüchen und Zeichnungen deutlicher zu erkennen.

Es zeigen:

Fig 1 eine perspektivische Ansicht der erfindungsgemäßen Vorrichtung, konstruiert und betrieben in Übereinstimmung mit den Grundsätzen der vorliegenden Erfindung,

Fig 1a eine perspektivische Ansicht, ähnlich wie Figur 1, aber mit Darstellung des Aufbaues zur Bildung des Querverschlusses im Folienschlauch, wie er nach unten über den Zuführstutzen gezogen wird, wobei Figur 1 in detaillierterer Darstellung den Aufbau zeigt, um den Schlauch über den Zufuhrstutzen zu ziehen,

Fig 2 ein teilweiser Vertikalschnitt durch einen Teil der Anordnung aus Figur 1,

Fig 3 eine vertikale Teilansicht, im wesentlichen entlang der Linie III-III aus Figur 2,

Fig. 4 eine vertikale Teilansicht, im wesentlichen entlang der Linie IV-IV aus Figur 2,

Fig. 5 eine vertikale Teilansicht, im wesentlichen entlang der Linie V-V aus Figur 1a und

Fig. 6 eine Draufsicht im wesentlichen entlang der Linie VI-VI aus Figur 1a, aber zum Teil mit Darstellung des Mechanismus für die seitwärts gerichtete Streckung der Falten aus dem Schlauch.

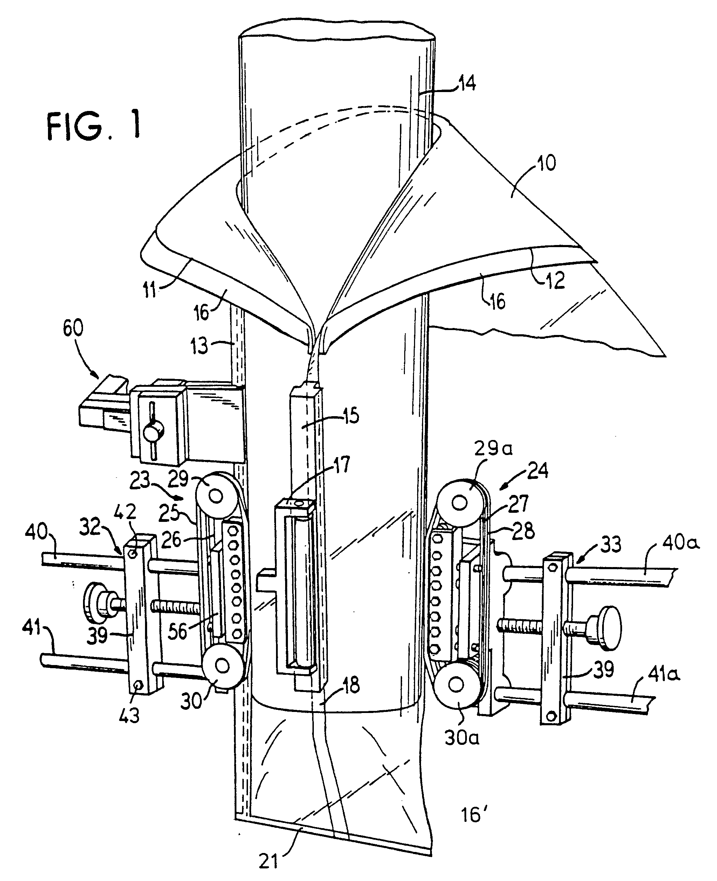

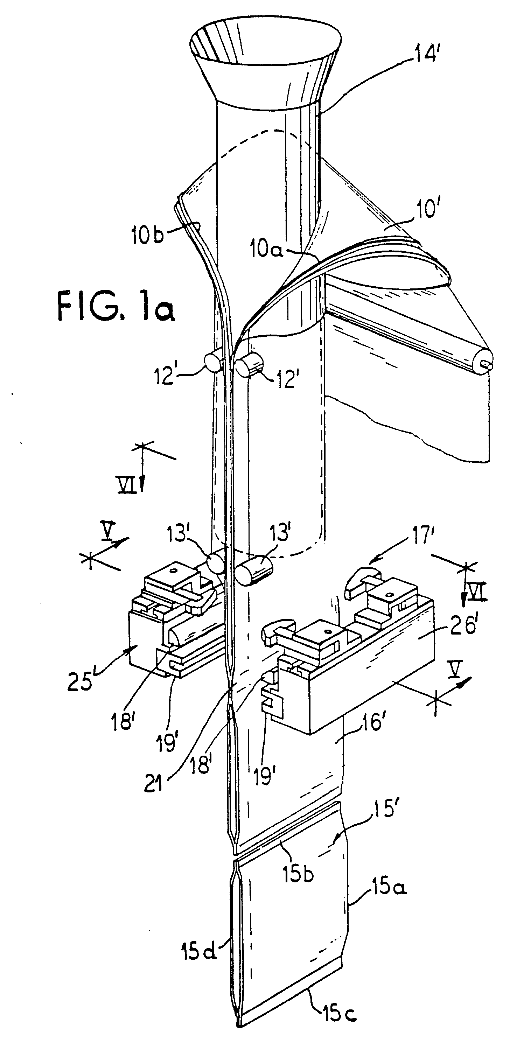

Wie in Figur 1 dargestellt, wird ein Folienband (10) von einer geeigneten Versorgungseinrichtung der dargestellten Vorrichtung zum Formen, Füllen und Verschließen zugeführt. Der Streifen der Folie (10) wird über eine besonders geformte Führung mit Flanken (16) geführt, so daß ein in vertikaler Richtung hohler Einfüllstutzen (14) umwickelt wird. Die Ränder (11) und (12) des Folienstreifens (10) werden zusammengeführt und verschlossen bzw. versiegelt. Sofern der Folienfilm (10) aus einem Material wie Polyäthylen besteht, erfolgt das Verschließen im Heißsiegelverfahren und es ist vorgesehen, daß verschiedene Formen von Einfach- oder Mehrschichtfolien eingesetzt werden können. Längs des Folienbandes (10) befindet sich ein fortlaufend wiederverschließbarer Verschluß (13). Dieser sorgt für einen zu öffnenden und wieder verschließbaren Verschluß bei der fertigen Verpackung.

Bei Betrieb der Vorrichtung muß die Folie zusätzlich vorwärts transportiert werden und während dieses Vorwärtstransportes werden die Ränder gegeneinander unter Bildung einer Seitennaht (18) versiegelt. Sobald der Folientransport stoppt, wird eine Quernaht gebildet und der fertige Beutel gemäß Figur 1a (15 ), wie dargestellt, abgetrennt. Sobald die Bodenversiegelung (21) hergestellt ist, werden Inhaltsstoffe in den Beutel durch den hohlen Zufuhrstutzen (14) eingefüllt, wonach die Folie (10) wiederum weitertransportiert wird, so daß der nächste gefüllte Beutel am Kopfende verschlossen und abgetrennt werden kann.

Die Folie (10) muß in der Weise weitertransportiert werden, daß sich keine Falten bilden oder sie einreißt und der wiederverschließbare Befestigungsstreifen (13) muß in seiner vorgesehenen Position gehalten werden, so daß er im Kopfteil des fertigen Beutels angeordnet ist. Der Vorschub kann beispielsweise durch eine Fotozelle (nicht dargestellt) gemessen werden, die sich an Zeichen auf der Folie orientiert; diese Methode wird benutzt, wenn Aufdrucke auf der Folie (10) vorhanden sind, die auf den fertigen Beutel ausgerichtet werden müssen. Nach einer alternativen Ausführungsform kann die Folie (10) über eine vorbestimmte Strecke gefördert werden, aber bei beiden Transportarten muß die Förderung gleichmäßig und ohne Beschädigung der Folie (10) erfolgen. Dies muß mit einer genügenden Kraft ausgeführt werden, so daß die Ränder (11, 12) der Folie (10) zusammengebracht und über dem Zufuhrstutzen (14) aufgezogen werden können und ferner muß an der Folie (10) eine Zugkraft in der Art aufgebracht werden, daß eine Richtungsänderung unterbleibt und die Folie (10) nicht beschädigt oder gefaltet wird.

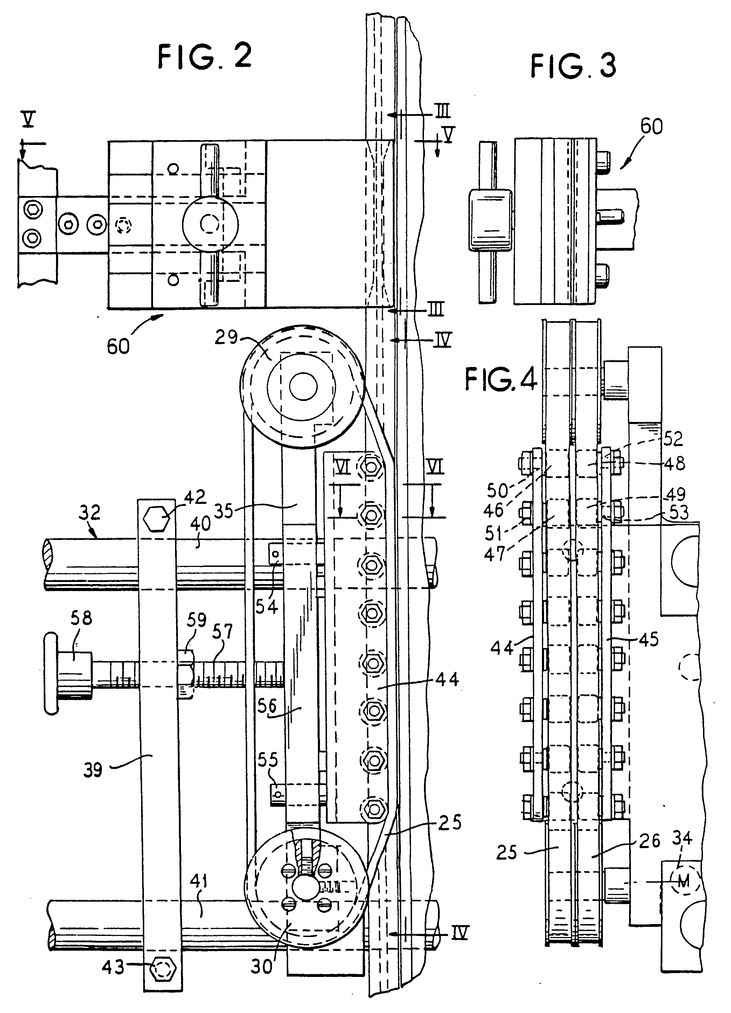

In Übereinstimmung mit den Prinzipien der vorliegenden Erfindung wird die Folie (10) reibschlüssig mit Mitteln nach unten gezogen, die einen Reibungskontakt mit der äußeren Oberfläche der Beutelfolie (10) besitzen. Wie in den Figuren 1 und 2 dargestellt, steht die Außenfläche des Schlauchbeutels (10) in Eingriff mit einem ersten und zweiten Paar von Treibriemen (23, 24), wobei sich die Riemen in Richtung der Folienförderung und die Kontakte mit der Folie (10) über eine beträchtliche Länge erstrecken.

Das erste Treibriemenpaar (23) mit den Treibriemen (25, 26) ist an der Beutelkante in einer bestimmten Lage so positioniert, daß die Riemen (25, 26) gespreizt auf dem wiederverschließbaren Reißverschluß (13) sitzen und ihn ausgerichtet halten, d. h. im wesentlichen den Verschluß (13) zwischen sich einklammern. Diametral gegenüber der Reibungsfördereinrichtung (23) ist ein weiterer Reibungsförderer (24) mit den Treibriemen (27) und (28) angeordnet. Die Treibriemenpaare (23, 24) auf den gegenüberliegenden Seiten der Folie (10) müssen im wesentlichen denselben Reibungsschluß mit der Folie (10) haben, um diese gleichmäßig nach unten zu ziehen. Die glatte Außenfläche des Einfüllstutzens (14) sorgt für eine Abstützung der Folie (10), wenn die Riemen (25 - 28) die Außenfläche der Folie berühren. Die Treibriemen (25 - 28) besitzen eine Reibkontaktfläche zur Folie (10) aus Polyurethan oder einem anderen Reibungskunststoff, oder andere Formen von Gummi oder sonstige Treibriemenbeläge können in Abhängigkeit von der eingesetzten Folie (10) Verwendung finden.

Vor dem ersten Treibriemensatz (23) ist eine Verschlußführungs- Baugruppe (60) vorgesehen (vgl. auch Fig. 2 und 3). Die Verschlußführung (60) besitzt einen vertikalen Führungsschlitz zur Aufnahme der vereinigten Rippen- und Falz- bzw. Nut- und Federelemente, die den wiederverschließbaren Verschluß (13) bilden.

Wie aus Figur 1a ersichtlich, besteht ein anderer Typ von Plastikfolie aus einem kontinuierlichen Gewebeband (10´), ausgestattet mit Rippenelementen (10a) an einem Rand sowie Nutelementen (10b) am anderen Rand, wobei diese zusammengefügt und verzahnt werden, sobald sie an einem entsprechend gestaltenden Vorsprung (12´) außerhalb des Stutzens (14´) zusammengebracht werden. Figur 1 zeigt dabei eine Folie (10) mit bereits verzahnten Rippen und Nutleisten (13) entlang der Oberfläche; die offenen Ränder (11, 12) der Folie (10) werden gemäß Fig. 1 zusammengebracht und bei (15) heiß versiegelt. In der anderen Ausgestaltung gemäß Fig. 1a befinden sich die Verschlußelemente (10a, 10b) ganz am Rand der Folie (10) und diese Verschlußelemente (10a, 10b) werden zusammengeführt, um auf diese Weise verzahnt zu werden; eine vertikale Heißverschweißung wie in Fig. 1 bei Ziffer 15 findet nicht statt.

In der in Figur 1 gezeigten Ausbildung wird die Seitennaht (18) fortlaufend während des Folientransports gebildet, erzeugt durch eine beheizte Leiste (15), die an einem Arm (17) gehalten ist. Wenn verhältnismäßig niedrige Temperaturen benutzt werden, kann der Balken (15) in Kontakt mit der Flankennaht verbleiben oder aber der Balken (15) kann jedes Mal abgehoben werden, sobald der Transport der Folie (10) stoppt.

Die Treibriemenpaare (23, 24) werden von den Stützeinrichtungen (32) und (33) getragen. Die Riemen haben einen im wesentlichen identischen Aufbau und daher werden nur die Riemen (25, 26) und die Halteeinrichtung (32) im Detail gemäß Fig. 2 beschrieben.

Feste Gestellstäbe (39), dargestellt auf der rechten und linken Seite in Figur 1, halten die Reibungsantriebs-Baugruppen und die Stützeinrichtung (32), getragen auf horizontalen Stangen (40) und (41) für den linksseitigen Reibungstrieb (23), und die Stangen (40a) und (41a) tragen den rechten Reibungstrieb (24) mit Stützeinrichtung (33).

Die Enden der Rahmenstäbe (39) sind geteilt, so daß die Schrauben (42, 43) festgezogen werden können, um die Stangen (40, 41) bzw. (40a, 41a) in ihren justierten Positionen zu verklemmen (vgl. Fig. 2).

Die Stangen (40, 41) tragen die Doppelrollen (29) und (30) für die Riemen (25) und (26); die Stangen (40a, 41a) tragen die Doppelrollen (29a) und (30a) für die Riemen (27) und (28). Wie Figur 4 zeigt, sind geeignete Antriebseinrichtungen vorgesehen, um die Achswellen der Rollen (30, 30a) anzutreiben; der Motor (34) ist dargestellt als durch einen nicht gezeigten Kontrollmechanismus intermittierend angetrieben, so daß der Motor (34) für eine angemessene Zeitspanne läuft und für den notwendigen Vorschub sorgt, damit der fertige Beutel (vgl. Fig. 1a, Ziffer 15) die richtige Länge bekommt. Die Riemen (25 - 28) auf jeder Seite des Einfüllstutzens (14, 14') werden gleichzeitig und für dieselbe Distanz angetrieben.

Die Riemen (25 - 28) werden ferner mit einer vorbestimmten Kraft gegen die Plastikfolie (10, 10') gedrückt, wobei für diesen Zweck Stützrollen (46 - 49) und weitere nicht bezifferte Rollen an den Innenflächen der Riemen (25 - 28) anliegen.

Wie in den Figuren 2 und 4 dargestellt, sind die Stützrollen (46 - 49) hintereinander in Längsrichtung hinter den Riemen (25, 26) angeordnet. Gemäß Figur 4 unterstützt die Reihe von Gleitrollen bei (46) und (47) den Riemen (25) und die Serie von Laufrollen (48, 49) unterstützt den Gurt (26). Diese Rollen werden auf ihren Achswellen in den Seitenplatten (44) und (45) gelagert. Zum Zwecke der Montage der Gleitrollen weisen die Seitenplatten (44, 45) wechselseitig Löcher zur Aufnahme der Achswellen auf. Beispielsweise wird die Gleitrolle (46) so angebracht, daß ihre Achswelle in die Öffnung (50) in der Rahmenwand (44) eingefügt wird. Die benachbarte Rolle (48) für den Riemen (26) wird montiert, indem deren Welle in das Loch (52) geschoben wird. In gleicher Weise wird die Rolle (49) unter der Rolle (48) installiert, indem ihre Achswelle in das Loch (53) in der Seitenplatte (45) eingebracht wird, während man die gegenüberliegende Rolle (47) in die Öffnung (51) schiebt. Mit anderen Worten, die Seitenplatten (44) und (45) haben abwechselnd Löcher und Durchgangsöffnungen, die bezogen auf die beiden Platten (44, 45) versetzt sind und die den Zusammenbau der Rollen in den Seitenplatten (44, 45) erlauben.

Wie in Figur 2 dargestellt, sind die Seitenplatten (44) und (45) Teil einer U-förmigen Abstützung, die auf den Schäften bzw. Stielen (54) und (55) montiert sind, wobei die Stiele (54, 55) ihrerseits von einer Grundplatte (56) getragen werden. Die Grundplatte (56) wird über die Gewindespindel (57) zur Kontrolle der Kräfte, die die Rollen (46 - 49) auf die Riemen (25 -28) ausüben nach innen gedrückt.

Die Gewindespindel (57) ist in das Gestell (39) geschraubt. Durch Drehen des Knopfes (58) auf der Spindel (57) wird die Größe der Kraft auf die Platte (56) für einen geeigneten Anpreßdruck zwischen Rollen und Treibriemen eingestellt und wird in dieser Position mittels einer Feststellmutter (59) gehalten. Die Riemenanordnung (24), auf der rechten Seite in Figur 1, wird in gleicher Weise eingestellt, so daß die Treibriemen (25 - 28) an jeder Seite des Einfüllstutzens (14) mit gleicher Kraft auf die Folie (10) drücken.

Eine andere Art und Weise zur Erzielung einer Reibschlußverbindung zwischen den Treibriemen (25 - 28) und der Folie (10) zum Transport besteht in der Aufbringung von Vakuum auf die Folie (10) durch die Riemen (25 - 28) hindurch. Durch Anordnung einer Vakuumkappe (nicht dargestellt) hinter den Riemen (25 - 28) und durch Versehen der Riemen mit Löchern, wird ein leichtes Vakuum die Folie (10) dicht an die Oberfläche der Riemen ziehen, so daß die Folie zusammen mit der Bewegung der Riemen entsprechend der Reibung zwischen den Riemen und der Folie vorrücken wird. Mit Hilfe der Vakuumanordnung können die Riemen (25 - 28) so ausgerichtet werden, daß sie die Folie (10) nicht gegen den Einfüllstutzen (14) drükken, aber stattdessen die Folie (10) in leichtem Kontakt mit dem Einfüllstutzen (14) nach unten ziehen, oder die Riemen können auch einen geringen Abstand vom Einfüllrohr (14) haben. Ein äußerst geringes Vakuum ist alles was benötigt wird, um die Folie (10) fest an die Riemen (25 - 28) zu ziehen, und die Riemen (25 - 28) können auf diese Weise gekürzt werden, so daß die Kontaktlänge zwischen Folie (10) und Riemen (25 - 28) kleiner sein kann als in der Zeichnung dargestellt. Das Vakuum wird am unteren Ende des Kontaktes zwischen Riemen und Folie ausgeschaltet, so daß die Folie (10) von dem Riemen (25 - 28) am unteren Ende der Riemenbewegung losgelassen wird. Auf diese Weise wird tatsächlich die Folie (10) entsprechend einem Reibschluß zwischen Riemen und Folie nach unten gezogen, aber die Reibschlußverbindung wird mittels Vakuum eher erreicht, als wenn der Riemen gegen die Folie gedrückt wird, da sie verschiebbar von dem Zuführstutzen (14) zurückgedrückt wird. Eine Steuerung des Reibschlusses zwischen der Folie (10) und den Riemen (25 - 28) kann durch eine Erhöhung oder Verminderung des Vakuums geregelt werden, um sich auf eine mehr oder weniger glatte Folie oder auf eine Folie einzustellen, die mehr oder weniger Druck zum Herunterziehen benötigt. Wenn die Stützrollen (46 -49) zur Erzielung eines Reibschlusses zwischen Riemen (25 - 28) und Folie (10) eingesetzt werden, kann der Druck zwischen den Rollen und den Riemen stufenlos eingestellt werden.

Figur 1a veranschaulicht eine Formgebungs-, Befüllungs- und Versiegelungsmaschine, wobei ein fortlaufendes Band zur Beutelherstellung aus Plastikfolie (10´) zugeführt und über einem Zuführstutzen (14´) geformt wird. Das Material (10´) kann wiederum Plastikfolie oder eine Kunststoffverbundfolie sein, und die Ränder der Folie (10´) werden zum Zusammenfügen sich verzahnender Profilverschlüsse (10a) und (10b), die sich auf der Oberfläche der Folie (10´) befinden, zusammengebracht. Bei der Vorrichtung wurde die Folie (10´) mit ineinandergreifenden Profilverschlüssen abgebildet, beispielsweise vom Nut- und Federtypus, und diese Verschlüsse (10a, 10b) befinden sich auf den Folienrändern und werden ausgerichtet und zusammengedrückt, um miteinander zwischen gegenüber angeordneten Rollen (12´) verbunden zu werden, während die Folie (10´) das Rohr (14´) umschließt. In einer anderen Ausgestaltung gemäß Figur 1 weist die Folie (10) bereits die ineinandergreifenden Profilierungen (13) auf und die Ränder (11, 12) der Folie (10) werden zusammengefügt.

In Figur 1 wird in erster Linie der einzigartige Aufbau und das Verfahren zum Herunterziehen des Folienschlauches über den Zufuhrstutzen (14) gezeigt. Figur 1 zeigt aber nicht im Detail den Mechanismus zur Bildung der Quernaht (21) am Ende des Rohres; dieser Mechanismus wird in Figur 1a dargestellt. Die Figuren 1 und 1a unterscheiden sich auch dadurch, daß Figur 1 eine Anordnung zeigt, bei der sich die Verschlußprofile (13) am oberen Ende der gebildeten Beutel auf der Oberfläche des Schlauches befinden und bereits zusammengefügt sind. Die Folie (10) wird dabei vorwärts gefördert und eine vertikale Naht (18) gebildet, um den Schlauch gemäß Figur 1 zu vervollkommnen. In Figur 1a besitzt die Folie (10´) Profilierungen (10a) und (10b) an ihren äußeren Rändern und diese Profile (10a, 10b) werden zusammengeführt und gegeneinandergedrückt, wobei sie durch gegenüber angeordnete Rollen (12´) zusammenkommen. Das Ergebnis wird in beiden Fällen im wesentlichen dasselbe sein, nämlich bestehend aus einem gebildeten Beutel (15´), wobei der Boden durch die doppelte Folie (10, 10´) und die Seitennähte durch Quernähte gebildet werden, wie sie beispielsweise bei (21) quer über den Schlauch und auch am oberen Ende der Beutel dargestellt sind; die Beutel werden durch die zusammengefügten Profilierungen bei (13) in Figur 1 und in Figur 1a durch die Ziffern (10a) und (10b) verschlossen. Zusätzliche Rollen (13´) gemäß Figur 1a drücken die ausgerichteten Profile (10a) und (10b) zusammen, wenn der Schlauch heruntergezogen wird. Es versteht sich, daß bei der Anordnung gemäß Figur 1a der Schlauch durch Treibriemen, wie sie in Figur 1 gezeigt sind, nach unten gezogen wird.

Mit Bezug auf beide Figuren 1 oder Figur 1a werden Inhaltsstoffe in den Schlauchbeutel (16´) durch die Zufuhrstutzen (14, 14´) eingefüllt nachdem die Querversiegelung (21) am unteren Ende des Schlauches gebildet wurde. Eine nachfolgende Querversiegelung (21) erfolgt oberhalb der Inhaltsstoffe und ein Fertigbeutel (15´) wird dann vom Beutelschlauch (16´) abgetrennt. Dies wird veranschaulicht in Figur 1a durch den fertiggestellten Beutel (15´), wobei vorher eine Naht (21) gebildet wurde. Der vollständig fertiggestellte Beutel (15´) wird abgetrennt vom Schlauch (16´) und besitzt einen Boden (15a) aus der doppelten Folie und Seitennähte (15b) und (15c). Am oberen Ende des Beutels (15d) befinden sich Grifflappen mit den geschlossenen Verschlußprofilen (10a, 10b), die die Kopfkante (15d) geschlossen halten.

Ein wichtiges Merkmal der vorliegenden Erfindung ist das Spannen des ausgebeulten Schlauches in der Art, daß alle Falten von der Plastikfolie entfernt werden, so daß die Querversiegelung faltenfrei durchgeführt werden kann und dadurch die Bildung jeglicher Leckstellen verhindert und gleichzeitig ein äußerlich ansprechenderer Beutel erzeugt wird. Diesbezüglich unternommene Anstrengungen, den Beutelschlauch wölbungsfrei und gestreckt auszubilden, sahen vor, daß Kräfte durch Einklemmen und seitliches Ziehen aufgebracht werden. Die Folienschichten wurden aber nicht in solcher Weise gezogen, daß die Falten von beiden Folienschichten entfernt werden konnten. Die Falten wurden ebenfalls nicht an den Beutelseiten entfernt, so daß Falten unterhalb der Klemmglieder verblieben. Frühere Bemühungen zur Glättung des Schlauches und Entfernung der Falten beim Querversiegeln haben nicht zu befriedigenden Betriebsergebnissen geführt, wobei man sich bemühte, den Beutel von der Folieninnenseite zu spannen. Andere Anstrengungen wurden gemacht, den Beutel seitwärts von außen zu ziehen, aber diese Anstrengungen führten ebenfalls zur Faltenbildung, da solche Einrichtungen gewöhnlich mit Oberflächenkontakt arbeiteten oder den Kontakt innerhalb der Folienränder aufnahmen, wobei in der momentanen Vorrichtung ein Punktkontakt ausgenutzt wird, der zwar nach innen wandert, aber außerhalb der seitlichen Beutelränder beginnt und dann sanft nach innen bewegt wird, um das Material seitlich zu spannen und die Falten vollständig zu entfernen.

In Übereinstimmung mit der vorliegenden Erfindung schließt die in Figur 1a gezeigte Ausrüstung einen seitlichen Spannmechanismus (17´) ein, der zu den äußersten Beutelrändern hin spannt. Der Spann- und Streckmechanismus kann direkt angrenzend an die Versiegelungsbalken (19´) angeordnet sein, die den Folienschlauch quer versiegeln, und zwar sowohl oberhalb oder unterhalb der Verschlußbalken (19´). Der Spannmechanismus ist von der Art, daß seine Spannkraft an den am weitesten entfernten Rändern des ausgebeulten Schlauches (16′) ansetzt und die Streckkraft weich auf beiden Schichten im Punktkontakt angreift. Das Spannen der Folie (16′) wird solange fortsetzt, bis diese vollständig eben ist und bis unmittelbar vor dem Einsatz der Versiegelungsbalken (19′). Die Versiegelungsleisten (19′) werden so erhitzt, daß wenn sie gegen die Außenfläche der Folie (16′) gedrückt werden, die thermoplastische Folie unter Bildung einer Quernaht (21) zusammengefügt wird.

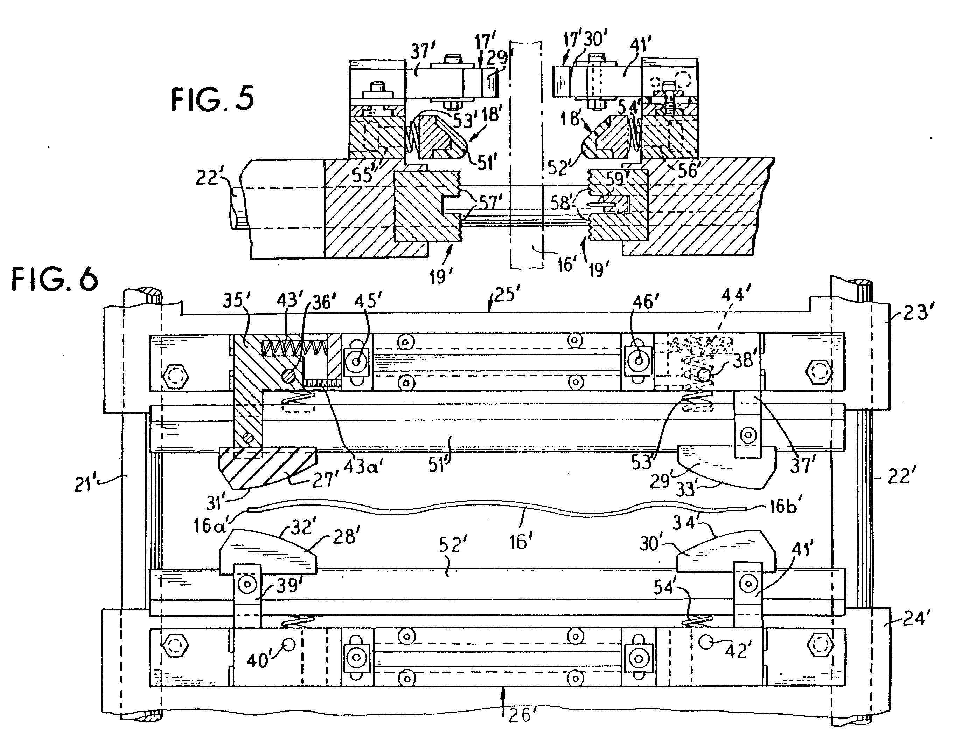

Gemäß den Figuren 1a, 5 und 6 beinhaltet der Mechanismus im Detail eine Spanneinrichtung (17′), Haltebalken (18′) sowie einen Versiegelungs- und Schneidemechanismus bei (19′). Die drei Teile der Ausrüstung zum Strecken, Spannen und Verschließen sowie Schneiden der Schlauchfolie (16′) werden gemäß Figur 6 auf seitlich beweglichen Schlitten (23′) und (24′) gehalten, insgesamt bezeichnet mit den Ziffern (25′) und (26′), die seitlich horizontal auf den Führungsbalken (21′) und (22′) gleiten. Die Schlitten bzw. Wagen (25′, 26′) werden im Betrieb an den Beutelschlauch (16′) durch einen nicht dargestellten Mechanismus nach innen gedrückt. Ein solcher Betriebsmechanismus kann aus einem hydraulisch oder pneumatisch betriebenen Zylinder bestehen, der die Schlitten (25′, 26′) zusammendrückt und sie nach seitlichem Straffen, Strecken sowie Querversiegelung und Abtrennen wieder auseinander bringt.

Die Spanneinrichtung (17′) beinhaltet im wesentlichen gegenüberliegende Kurvenkörper (27′) und (28′) an einem Schlauchrand (16a′) und gegenüberliegende Kurvenkörper (29′) und (30′) am anderen Rand (16b′).

Bei Beginn der Bildung der Quernähte werden die Schlitten (23′) und (24′) aufeinanderzugeschoben, und die spannenden Kurvenkörper (27′) und (28′) berühren sich zunächst punktförmig gerade außerhalb des seitlichen Randes (16a′) des Schlauchbeutels (16′). Gleichzeitig berühren sich die Kurvenkörper (29′) und (30′) punktförmig außerhalb des Außenrandes (16b′) des Schlauchbeutels (16′). Tatsächlich berühren sich die Kurvenkörper auf einer Linie bei vertikaler Draufsicht aber berühren die Folie als Punktkontakt in einer horizontalen Ebene.

Die Kurvenkörper (27′ - 30′) sind an drehbeweglichen Tragarmen befestigt und der Drehpunkt der genannten Tragarme ist derart seitwärts versetzt von den Oberflächen der Kurvenkörper, daß wenn die Kurvenkörper gegeneinandergedrückt werden, hier der Kontaktpunkt nach innen rollt und die Ränder (16a′, 16b′) des Schlauchbeutels (16′) überrollt werden und gleichzeitig das Ziehen nach außen beginnt, um den Schlauch (16′) flach zu strecken und alle Falten zu entfernen. Der Punktkontaktdruck wird, während er nach innen wandert, mit im wesentlichen gleichbleibender Kraft aufgebracht.

Was die Konstruktion der Halterung für die Kurvenkörper angeht, so sind die Kurvenkörper (27′) und (28′) von den drehbaren Armen (35′) und (39′) gehalten. Die Kurvenkörper (29′) und (30′) werden in den Dreharmen (37′) und (41′) gelagert. Die Tragarme (35′) und (39′) sind drehbar bei (36′) und (40′) gelagert. Die Kurvenkörpertragarme (37′) und (41′) sind bei (38′) bzw. (42′) drehbar gelagert. Wie zu erkennen ist, sind diese Drehlagerungspunkte seitlich vom ersten Berührungspunkt der Kurvenkörper versetzt. Auf diese Weise werden die zwischen den Kurvenkörpern wirksamen Kräfte dazu führen, daß sich die Arme seitwärts nach außen bewegen.

Die Kurvenkörper (27′ - 30′) werden vorzugsweise aus Gummimaterialien gebildet, so daß ihre Außenflächen (31′ - 34′) reibschlüssig die Folie des Schlauchbeutels (16′) ergreifen und sie seitwärts nach außen ziehen. Die Außen- bzw. Stirnflächen (31′ - 34′) sind auch logarithmisch gestaltet, so daß wenn der Kontaktpunkt zwischen gegenüberliegenden Kurvenkörpern wandert, er nach innen über den Schlauchbeutel rollt, um einen besseren Widerhalt zu bekommen und wandert gleichzeitig seitwärts nach außen zur Aufbringung der Spannkraft auf den Schlauchbeutel (16′). Die logarithmischen Kontaktflächen der Kurvenkörper (27′) und (28′) sind bezeichnet mit (31′) und (32′); die logarithmischen Kontaktflächen für die Kurvenkörper (29′) und (30′) sind bezeichnet mit (33′) und (34′).

Nachdem die Kurvenkörper (27′ - 30′) sich berührt haben und nachdem sie zur Aufbringung ihrer Spannkräfte nach innen gedreht sind, beginnend an den äußersten Rändern (16a′) und (16b′) des Schlauches (16′), wird der Schlauch (16′) durch die Preßleisten (51′) und (52′) gemäß den Figuren 5 und 6 eingeklemmt und der Schlauch (16′) wird sodann durch die Außenwände (57′) und (58′) der Heizbalken heiß versiegelt. Zur selben Zeit trennt gemäß Figur 5 ein Messer (59′) in einer Ausnehmung der Heizbalken (58′) den unteren fertigen Beutel (15′), Figur 1a, vom Schlauchbeutel (16′) ab.

Sobald dieses durchgeführt wurde, werden die Schlitten (25′) und (26′) vom Schlauchbeutel (16′) zurückgezogen. Die Tragarme (35′, 39′, 37′, 41′), die die Kurvenkörper (27′ - 30′) halten, sind federgespannt, so daß die Kurvenkörper zurück in die Position gedreht werden, wie das in Figur 6 gezeigt ist. Der Arm (35′) ist mittels Ringdruckfeder (43′) vorgespannt, die dazu tendiert, den Tragarm (35′) in die neutrale ungespannte Position, wie in Figur 6 zu drängen. Ein einstellbarer Anschlag (43a′) begrenzt die nach rückwärts gerichtete Drehbewegung des Tragarmes (35′). Gleichartige Federn sind für die anderen Tragarme vorgesehen, wobei die Feder (44′) den Tragarm (37′) bedient.

Die seitliche Lage der Arme ist mittels eines nicht im Detail gezeigten Mechanismus einstellbar. Die Lage der Spannglieder zueinander ist einstellbar, wie z. B. mittels der Schrauben (45′) und (46′) in Figur 6.

In der relativen Position der einzelnen Elemente nachdem der Schlauchbeutel (16′) gespannt wurde, spannen die Preßleisten (51′) und (52′) den aufgespannten Schlauch (16′). Die Klemmbalken (51′. 52′) besitzen weiche Nasen, um die Folie nicht zu beschädigen und sind auf Kolbenstangen (55′) und (56′) befestigt, wie sie in Figur 5 gezeigt sind. Diese Stangen (55′, 56′) sind mittels Federn, wie beispielsweise (53′) und (54′) vorgespannt und drängen die Preßleisten (51′) und (52′) in eine Richtung zum Einklemmen des Schlauchmaterials (16′). Mit dem so eingeklemmten Material erfassen die Stirnseiten (57′) und (58′) der Heizbalken die Folie (16′), werden erwärmt und querversiegeln sie unter Bildung einer Querabdichtung über den Schlauch (vgl. Ziffer 21 in Fig. 1 und 1a). Das Messer (59′) durchtrennt den Schlauch, so daß der fertige Beutel (15′) vom Schlauch (16′) abgelöst werden kann. Eine fakultative Anordnung ist möglich, wobei die Spannkörper (27′ - 30′) unterhalb der Siegelbalken (57′. 58′) ebensogut wie oberhalb der Siegelbalken eingerichtet werden können.

Nachdem der Schlauch (16′) quergestreckt und eine Quersiegelnaht (21) mit abgeschnittenem unterem Ende gebildet wurde, bewegen sich die Köpfe (25′, 26′), die die Mitnehmerklauen (17′) und die Versiegelungsausrüstung (19′) tragen, vom Schlauch (16′) weg. Eine neue Materiallänge wird von den Riemen (vgl. Fig. 1 Ziffer 23, 24) heruntergezogen bzw. nach unten transportiert.

Bei einigen Gelegenheiten mag es wünschenswert sein, zusätzlich eine Kraft zum Herunterziehen der Folie aufzubringen, wobei die Treibköpfe nach unten bewegt werden, während der Folienschlauch die eingeklemmte Position beibehält. Bei dieser Ausgestaltung verbleiben die Köpfe in Klemmposition, ziehen den Schlauch nach unten, werden dann gelöst und bewegen sich nach oben in ihre Ausgangsposition (wie in Figur 1a dargestellt) zur wiederholten Querversiegelung und zum Einklemmen einer neuen Schlauchlänge.

Im Betrieb, wenn eine endlose Versorgung mit Folie erfolgt, wie beispielsweise mit der Folie (10) in Figur 1, ziehen die Treibriemenanordnungen (23) und (24) auf gegenüberliegenden Seiten des Formgestaltungs- und Zuführrohres (14) die Folie (10) vorwärts über eine Formgebungsschulter (16) zur Bildung eines Schlauches. In der Anordnung von Figur 1 wird eine Seitennaht (18) gebildet und in der Anordnung nach Figur 1a werden Reißverschlußprofile (10a) und (10b) zusammengefügt; in jedem Fall wird eine verschlossene Länge eines Schlauches über dem Einfüllstutzen (14 bzw. 14′) gebildet.

Am unteren Ende des Schlauches erfolgt eine Querversiegelung (21) und Inhaltsstoffe fallen durch den Einfüllstutzen (14, 14′) auf den Boden des Schlauches. Die Treibriemeneinrichtungen (23) und (24) ziehen sodann die Folie (10, 10′) weiter herunter und der Beutel wird durch eine weitere Querversiegelung fertiggestellt. Der Fertigbeutel wird vom Schlauchende abgeschnitten, um nach unten herunterzufallen, wie beispielsweise dargestellt durch den Fertigbeutel (15′) in Figur 1a. Die Querversiegelungseinrichtung, wie sie generell mit den Bezugsziffern (25′) und (26′) in Figur 1a gezeigt ist, bewegt sich auf den Schlauch (16′) zu, glättet ihn und die auf besondere Weise befestigten und ausgebildeten Glättungs- und Spannkämme (27′) und (28′) an der einen Seite des Beutels (16′) und (29′) und (30′) an der anderen Seite des Beutels (16′), bewegen sich aufeinander bis zum Punktkontakt zu, bewegen sich dann auf die Ränder (vgl. Fig. 6, Ziffern 16a′, 16b′) der Beutelfolie (16′) zu und ziehen sie sanft nach außen, bis alle Falten entfernt sind. An dieser Stelle wird die Beutelfolie (16′) durch die Klemmnasen (18′) zur Stabilisierung eingeklemmt und die Quernaht (21) durch die beheizten Backen (57′) und (58′) gemäß Figur 5 gebildet, die das obere Ende des gefüllten Beutels versiegeln und die eine neue Abschlußversiegelung (21) am unteren Ende des Schlauches (16′) bilden. Ein vollständiges Einklemmen der Köpfe, wenn sie sich weiter nach innen bewegen, bewirkt, daß das Messer (59′) den Fertigbeutel (15′) abschneidet, so daß dieser nach unten fallen kann, wie das in Figur 1a gezeigt ist. Die Faltenglättungskämme (17′) arbeiten automatisch und haben gleichartig geformte äußere Stirnflächen und gleichartige Befestigungen, wie das im Detail in den Figuren 1a, 5 und 6 illustriert ist.

Somit wird deutlich, daß eine Vorrichtung und ein Verfahren zum Folientransport und zur Bildung von Beuteln vorgestellt wurde, daß die obengenannten Vorteile und Ziele erfüllt wurden und womit es möglich ist, eine Vielzahl von Materialien zu verwenden und zuverlässig Beutel mit passend hoher Herstellgeschwindigkeit zu erzeugen.

## Ansprüche

1. Verfahren zur Bildung, Formgebung und Befüllung eines Streifens von Plastikfolie mit in Längsrichtung sich erstreckenden, lösbaren Verschlußelementen darauf, wobei in einen hohlen Einfüllstutzen, geeignet für die schwerkraftmäßige Aufnahme von Beutelinhalten, diese in einem vertikalen Formbefüllungs- und dichtenden Einzelverpackungsvorgang eingefüllt werden, einschließlich der Schritte zum Querverschließen der unteren Endteile des gebildeten Schlauches zu Beutelabschnitten, **dadurch gekennzeichnet, daß** ein periodisches Verweilen und eine zeitweilige, nach unten gerichtete Förderung des Schlauches durch reibschlüssige Verbindung mit der Folienoberfläche und Drücken der Folie nach unten in aufeinanderfolgenden, periodischen Schritten vollzogen wird, und daß das Querverschließen und Befüllen des Schlauches zwischen diesen Schritten erfolgt.

2. Verfahren nach Anspruch 1, **dadurch gekennzeichnet, daß** die reibschlüssige Verbindung mit der Folienoberfläche an einem Ort rittlings auf der Reißverschlußleiste erfolgt, um die Ausrichtung der Folie aufrechtzuerhalten.

3. Verfahren nach Anspruch 1 oder 2, **dadurch gekennzeichnet, daß** zur Außenfläche der Folie eine reibschlüssige Verbindung besteht, indem diese gegen ein glattes inneres Rohrstück gedrückt wird.

4. Anlage zur schrittweisen Förderung eines fortlaufenden Streifens von Plastikfolie (10; 10′) mit sich in Längsrichtung erstreckenden, wiederverschließbaren Verschlußelementen (13; 10a, 10b) darauf, über ein vertikales rohrartiges Formstück (14; 14′) in einem Formgebungs-, Füll- und Verschließverfahren, **dadurch gekennzeichnet, daß**

a) in Längsrichtung Verschließelemente (13, 15; 10a, 10b, 12′, 13′) vorgesehen sind, die dichtend die Längsränder des Streifens der beutelbildenden Plastikfolie (10; 10′) zusammenfügen,

b) mit Querverschlußmitteln (19′) zur Bildung eines seitlich flachen Verschlusses quer über den Folienschlauch (16′) mit räumlicher Ausdehnung, während die Folie nicht transportiert wird,

c) sowie Einrichtungen (23, 24) zum reibschlüssigen Transport des Folienschlauches (16′) unter Berührung von dessen Oberfläche, wobei die erwähnten Transportmittel (23, 24) schrittweise angetrieben werden, um die Folie (16′) in Relation zu den Querverschlußmitteln (19′) in die richtige Lage zu bringen.

5. Anlage nach Anspruch 4, **dadurch gekennzeichnet, daß** die genannten Transportmittel (23, 24) zu Schleifen geschaltete Treibriemen (25 - 28) beinhalten und wobei die Außenfläche der Riemen mit der Folie (16′) in reibschlüssiger Berührung steht.

6. Anlage nach Anspruch 4 oder 5, **dadurch gekennzeichnet, daß** die genannten Transportmittel (23, 24) Treibriemen (25 - 28) beinhalten, deren Außenflächen die Folie berühren, sowie eine Vielzahl von Stützrollen (46 - 49) aufweisen, die die Riemen (25 - 28) in Richtung auf die Folie (16′) drücken.

7. Vorrichtung zur Formgebung, Befüllung und zum Verschließen für die Herstellung und Befüllung von Beuteln aus einer kontinuierlichen Plastikfolie, **gekennzeichnet durch** die Kombination folgender Merkmale:

a) ein vertikales Füllrohr (14; 14′), über dem die Folie (10; 10′) in einen, im allgemeinen zylindrisch geformten Schlauch (16′) zur Befüllung mit Inhaltsstoffen durch den Zufuhrstutzen (14; 14′) gebildet wird,

b) Einrichtungen (23, 24) zum Transport und zur Formgebung der Folie in einem abwärts gerichteten Verlauf über das Einfüllrohr (14; 14′) zur Bildung eines Schlauchbeutels (16′),

c) Querverschlußeinrichtungen (19′), angeordnet an einer Verschlußstation (25′, 26′) unterhalb des Füllrohres (14; 14′) zur Bildung von Nähten (21), quer über den Schlauch (16′), mit räumlichem Abstand bzw. über eine räumliche Spanne zur Herstellung von Beuteln (15′) zwischen den Nähten (21) und

d) mit einem seitlich glättenden Spannapparat (17′), angeordnet im allgemeinen an der genannten Verschlußstation (25′, 26′) unter Anwendung einer seitlich wirkenden Spannkraft an einer punktförmigen Angriffstelle zum Schlauch (16′), wobei die genannte Angriffsstelle sich von den Schlauchrändern (16a′, 16b′) nach innen bewegt und an der Nahtstelle (21) die Faltenbildung verhindert,

e) wobei die genannten Glättungselemente (17′) die Spannkraft am äußersten seitlichen Rand (16a′, 16b′) der Folie (16′) zur Glättung der gesamten Breite der Folie von den äußeren Rändern (16a′, 16b′) nach innen aufbringen.

8. Vorrichtung nach Anspruch 7, **dadurch gekennzeichnet, daß** die Spanneinrichtungen (17′) gegenüberliegende Kurvenkörper (27′ - 30′) umfassen, die die Schlauchränder (16a′, 16b′) mit gegenüberliegenden Stirnflächen (31′, 32′; 33′, 34′) berühren, und wobei die genannten Stirnflächen (31′ - 34′) der Kurvenkörper (27′ - 30′) logarithmisch gestaltet sind, so daß sie sich fortschreitend progressiv von den Folienrändern (16a′, 16b′) nach innen bewegen.

9. Vorrichtung nach Anspruch 7 oder 8, **dadurch gekennzeichnet, daß** die genannten Spanneinrichtungen (17′) drehbar an Punkten gelagert sind, die gegenüber den Berührungspunkten der Kurvenkörper (27′ - 30′) mit dem Schlauchbeutel (16′) so verlagert sind, daß die genannten Kurvenkörper (27′ - 30′) sich bei Berührung mit der Beutelfolie (16′) drehen.

10. Vorrichtung nach einem oder mehreren der Ansprüche 7 bis 9, **dadurch gekennzeichnet, daß** Verschlußbalken (57′, 58′) vorgesehen und so angeordnet sind, daß sie den Schlauchbeutel (16′) im wesentlichen sofort berühren, nachdem die Kurvenkörper (27' - 30') das Beutelmaterial (16') gespannt haben.

11. Vorrichtung nach einem oder mehreren der vorhergehenden Ansprüche 7 bis 10, dadurch gekennzeichnet, daß Trenneinrichtungen (59') zum Querabschneiden des Schlauchbeutels (16') vorgesehen sind, um einen fertigen Beutel (15') von dem Beutelschlauch (16') abzutrennen.

12. Vorrichtung nach einem oder mehreren der vorhergehenden Ansprüche 7 bis 11, dadurch gekennzeichnet, daß die Verschließeinrichtungen (19', 57', 58') oberhalb der Kurvenkörper (27' - 30') angeordnet und ferner Haltebalken (18') zum Einklemmen der Schlauchfolie (16') und Planlegung des Schlauchbeutels vorgesehen sind.

13. Arbeitsverfahren zur Bildung von Beuteln in einem Formgebungs-, Befüllungs- und Verschlußverfahren, dadurch gekennzeichnet, daß

a) die Folie schrittweise über einen Einfüllstutzen durch Herunterziehen der Folie mittels zu beiden Seiten des Rohres gegenüberliegenden reibschlüssigen Verbindungen zur Bildung eines Schlauchbeutels und Ablage von Inhaltsstoffen durch den Zufuhrstutzen transportiert wird,

b) durch Zusammenfügen der vertikalen Ränder der Folie zum Verschluß des Schlauchbeutels.

c) Querverschließen des Schlauchbeutels unterhalb des Einfüllrohres am Kopf einer Verschlußstation zur Bildung einer Querbeutelnaht, wobei die Beutelinhalte in den Schlauch oberhalb der Naht fallengelassen werden,

d) Spannen des Schlauchbeutels seitwärts vor dem Querverschließen und Aufbringung einer seitlichen Spannkraft an den äußeren Rändern des Schlauchbeutels und allmählicher Aufbringung der Kraft an einer Angriffsstelle, die sich vom Rand nach innen bewegt zum Glätten und Spannen der gesamten Breite des Schlauches, um die Faltenbildung an der Naht zu verhindern.

14. Arbeitsverfahren nach Anspruch 13, dadurch gekennzeichnet, daß sich der genannte Angriffspunkt progressiv nach innen auf dem Schlauch bewegt, während sich gleichzeitig die Stelle des Punktkontaktes nach außen bewegt, um die Aufbringung der Spannkraft fortzusetzen.

FIG. 1

FIG. 1a

# FIG. 2

# FIG. 3

# FIG.4

FIG. 5

FIG. 6